# EUROPEAN PATENT SPECIFICATION

(11) **EP 3 296 648 B1**
(45) Date of publication and mention of the grant of the patent: **20.05.2020**
(21) Application number: 17190071.5
(22) Date of filing: 08.09.2017
(51) Int. Cl.: F24D 17/00, F24D 19/10, E03C 1/044, G05D 23/13, F24H 1/12, G05D 23/275

(54) **TAPPING UNIT WITH ONLY ONE CONNECTION**
ZAPFEINHEIT MIT NUR EINER VERBINDUNG
UNITÉ DE PRÉLÈVEMENT À L'AIDE D'UN SEUL RACCORD

(30) Priority: 12.09.2016 DK 201600530
(43) Date of publication of application: 21.03.2018
(73) Proprietor: Danfoss A/S, 6430 Nordborg (DK)
(72) Inventor: NIELSEN, Helge, 6430 Nordborg (DK)
(74) Representative: Stevens, Brian

(56) References cited:
- EP-A1- 2 963 350
- EP-A1- 3 043 227
- EP-A2- 1 744 105
- DE-U1- 8 128 904

## Description

### BACKGROUND

The present invention relates to a tapping unit, such as a faucet, having a temperature adjustable feature for the tapped water.
Faucets exists in a wide range of different embodiments. Different kinds of heating the water also exists, where one way is by a heat exchanger moving heat from a hot heat transferring fluid to the colder domestic water. Especially for such heating systems the temperature of the tapped water is set by mixing unheated domestic water with heated water.

For example, a thermostatic water tap connected to a cold and a hot water supply gives a high energy consumption, installation and design limitations.
A document, EP2963350, disclose a system where warm heating water is supplied only when demand for hot drinking water flows into the manifold with a rate sensor positioned at the outlet line of the heat exchanger domestic flow path.

The aforementioned document EP29663350 discloses the preamble of claim 1.

### SUMMARY OF THE INVENTION

The problems with prior solutions is solved by introducing a fluid flow system comprising a domestic flow path connecting a tapping unit outlet to a supply of domestic fluid, where a heat exchanger has a secondary flow path connected at the domestic flow path, the tapping unit connected to the secondary side flow path outlet, and where flow setting means is adapted for a user to open and close a domestic flow regulating means connected to the domestic flow path, said flow system further includes a heating flow regulating means for adjusting the flow rate of a heat exchanging fluid through a primary side path of said heat exchanger, where said system comprises means to ensure said heating flow regulating means is only open when there is a flow through said domestic flow path. This ensures the heating fluid only flows when there is a demand for a heated tapped domestic fluid, thus not wasting not used heat transfer from the heat exchanging fluid flowing in the primary side when not required.

In an embodiment a temperature sensor is positioned at the domestic flow path after the secondary flow path outlet for measuring the temperature of said domestic fluid, and where said the heating flow regulating means is to adjusted according to a signal communicated from a temperature sensor according to a set-point temperature set by temperature setting means. The flow setting means and/or temperature setting means in one embodiment is a part of the tapping unit, and in another embodiment is positioned elsewhere, possible being set by a portable media like a cell phone or laptop. The user hereby can select a desired temperature of the fluid to be tapped, but the temperature sensor measures the actually tapped fluid and sends a signal to the heating flow regulating means to adjust the flow to keep the tapped fluid temperature at the set set-point temperature. Thereby is ensured that the system requires does not require the heat exchanger to heat the domestic fluid to a temperature higher than the one required, thus not wasting unrequested energy, just as only the necessary volume amount of heat exchanging fluid passes the primary side. To make a simple solution of only opening for the heat transferring fluid flow in the primary side of the heat exchanger when there is a fluid flow of domestic fluid in the secondary side, in the invention the heating flow regulating means is connected to flow sensing means positioned in relation to the domestic fluid flow path, and where the first flow regulating part is opened only when the flow sensing means registers a flow of domestic fluid.

To ensure the flow regulations, in an embodiment first flow regulating means includes a valve forming a valve opening and is connected to an actuator connected to said signal communication and comprising positioning means to adjust said valve opening in response to a signal from said signal communication.

In an embodiment wherein said heating flow regulating means forms a first part and said flow sensing means forms a second part of a flow regulating means connected in relation to the primary and secondary flow path respectively of said heat exchanger. This e.g. could be used to form it as a single unit possible being integrated into or onto the heat exchanger.

In a simple mechanical version in an embodiment said temperature sensor includes a flow sensor volume filled with a gas and/or fluid reacting to a temperature change by a change of its volume, and where said communication is a fluid communication connected to an inner volume of an actuator connected to said heating flow regulating means affecting its valve opening. This version is cheap and simple to manufacture and install.

In an embodiment, this mechanical temperature sensor includes an adjustable volume part connected to said temperature setting means such that a regulation of the temperature setting means induces a volume change of the adjustable volume part and thereby a changed temperature set-point.

According to the invention, the second part is a check valve physically connected to the heating flow regulating means opening it when there is a flow in the domestic flow path, and otherwise being closed, This gives a simple, robust and chap solution, that also would be suitable if in integrate into or onto the heat exchanger.

In an embodiment suitable for a more electrical version, the temperature setting and/or flow setting means communicates with a controller that also communicates with the temperature sensor and where the controller translates the settings and the measured temperature into a control signal communicated to said heating flow regulating means and said domestic flow regulating means. The temperature sensor thus would be any suitable for sending a signal to a controller, where said controller may include digital data storing means and a processor. This version could also be suitable for being connected e.g. to the cloud or the internet in general, or just for e.g. wireless setting and or tracking. In an embodiment the controller communicates with actuating means connected to said first regulating part and/or said flow regulating part. Thereby the controller may send instructions to the actuating means to adjust the flow rate, optionally also receive feedback from the actuating means and/or flow regulating means.

In an embodiment said flow setting means is said flow sensing means. The controller then would know a fluid flow of the domestic fluid is requested and thus could control to open and set the respective flow rates.

In an embodiment said flow setting means is connected to valve within said tapping unit for setting the flow rate of domestic fluid to be tapped.

The present invention also related to the method to control the tapping of a domestic fluid by a tapping unit connected to a flow system comprising a heat exchanger with a primary flow path and a secondary flow path, said method include setting a requested flow rate and set-point temperature of said tapped fluid by flow setting means and temperature setting means respectively, where the flow setting means communicates with a domestic flow regulating part controlling the flow of said domestic fluid through said secondary flow path and out of the tapping unit, where said method includes controlling a heating flow regulating means regulating the flow of heat exchanging fluid through said primary side in such a manner that the heating flow regulating means is opened in response to an opening domestic flow regulating means and closed when the domestic flow regulating means is closed, but otherwise heating flow regulating means (8a) and domestic flow regulating part is regulated independently. Again this ensures the heating fluid only flows when there is a demand for a heated tapped domestic fluid, thus not wasting not used heat transfer from the heat exchanging fluid flowing in the primary side when not required.

In an embodiment the method includes that once the first flow regulating part is opened, then it is regulated in response to a signal communicated from a temperature sensor measuring the temperature of said domestic fluid at a position between the secondary side flow path outlet and the tapping unit outlet to control the temperature according to said set-point temperature. Again thereby is ensured that the system requires does not require the heat exchanger to heat the domestic fluid to a temperature higher than the one required, thus not wasting unrequested energy, just as only the necessary volume amount of heat exchanging fluid passes the primary side.

In an embodiment according to any of the previous embodiment, said connection of the tapping unit to the secondary flow path outlet of said heat exchanger is the only fluid connection to said tapping unit.

### FIGURES

- Fig. 1: Fluid flow system including according to an embodiment of the present invention including a tapping unit connected to the secondary side outlet of a heat exchanger only.
- Fig. 2: Tapping unit according to an mechanical embodiment.
- Fig. 3: Tapping unit according to an electronic embodiment.
- Fig. 4: Fluid flow system according to another embodiment where a by-pass line in addition connects the tapping unit directly to the cold fluid line.
- Fig. 5: Flow chart illustrating one embodiment method of regulation according to an embodiment of the present invention.
- Fig. 6: Flow chart illustrating a second embodiment method of regulation according to an embodiment of the present invention.

### DETAILED DESCRIPTION OF THE INVENTION

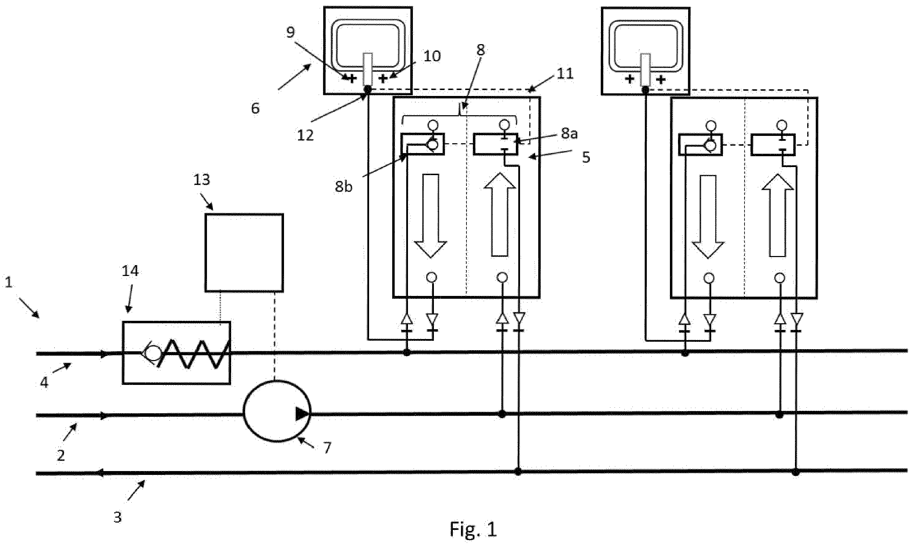

A heating flow system 1 as shown schematically in fig. 1 may comprise a heating fluid supply line 2 connected to a primary side inlet of a heat exchanger 5 for feeding it with a heat transferring fluid. The primary side outlet of the heat exchanger 5 are connected to a heating fluid return line 3 for removing the heating fluid, after it has passed the primary flow path of the heat exchanger 5.

A cold water line 4 connects the secondary side flow path of the heat exchanger 5 with cold water through a secondary side inlet.

In the heat exchanger 5 heat is transferred from the heat transferring fluid flowing in the primary flow path through a heat transferring surface to the cold water flowing in the secondary flow path.

In one embodiment, a stack of interconnected micro-structured heat exchanger plates forms the primary and secondary flow paths, such that every second flow path between the neighbouring plates forms the primary side of the heat exchanger 5 and is connected to the primary side inlet and outlet, and the other every second flow paths forms the secondary side of the heat exchanger 5 and is connected to the secondary side inlet and outlet.

The secondary side outlet is connected to a tapping unit 6, such as a faucet.

The flow path from the cold water line, passing the secondary flow path of the heat exchanger 5 and to the outlet of the heat exchanger in the following is referred to as the domestic flow path.
In the illustrated embodiment pumping means 7 forms the flow of the heating fluid through the heating fluid supply line 3, the primary side flow path of the heat exchanger 5 and the heating fluid return line 4.

Flow in the cold water line 4 may be induced by some pressurizing means such that when the tapping unit 6 starts tapping water the pressure difference squeezes the water through the cold water line 4, the secondary side flow path and outlet of the heat exchanger 5 and to the tapping unit 6.

The flow controlling means 8 may include heating flow regulating means 8a for controlling the flow rate through the primary side of the heat exchanger 5.

The flow controlling means 8 may also comprise flow sensing means 8b sensing and/or reacting when there is a flow in the domestic flow path, It may be formed as two separate units 8a, 8b or may be interconnected such that the operates as a single unit. It may be integrated in or external to the heat exchanger 5. The flow controlling means 8 may include valves 8a and/or 8b.

In an embodiment, once tapping of water starts from the tapping unit 6 the flow sensing means 8b of the flow controlling means 8 reacts by opening for the flow through the secondary side of the heat exchanger 5. This secondary flow rate may be set by through flow setting means 10 at the tapping unit 6 by a user according to a desired delivered flow of water. In an embodiment the tapping unit 6 thus communicates 11 with the flow controlling means 8 to open for the flow to a set flow rate according to the user setting. The flow controlling means 8 thus may comprise actuating means to be able to make the adjustment.

The flow sensing means 8b reacts to a flow in the domestic flow path by inducing an opening of the heating flow regulating means 8a thus opening for the flow of heat transferring fluid though the primary path to heat the fluid passing the secondary path.

The temperature of the fluid leaving the secondary outlet depends on numerous features, such as the material and dimensions of the heat exchanger, the initial temperature of the heat transferring fluid and the cold water in the heating fluid supply line 2 and cold water line 4 respectively, but also on their relative flow rates in the primary and secondary flow paths of the heat exchanger 5.

The primary and secondary side flow rates are adjustable, and in an embodiment the tapping unit 6 thus comprises temperature setting means 9 for the user to select a desired temperature, the temperature set-point, where this setting along with the flow rate setting is translated into a signal to the flow controlling means 8 to adjust the flow rates accordingly by the heating flow regulating means 8a.

In one embodiment the user selected flow rate and / or temperature is not directly related to the actually delivered flow rate and / or temperature, but the user manually needs to adjust until being satisfied.

In a more advanced embodiment the user selected flow rate and / or temperature is directly related to the actually delivered flow rate and / or temperature. This could be due to some established tabled relation forming the basis for an calculation of the required primary and secondary flow rates, but in the more flexible illustrated embodiment a temperature sensor 12 is connected to measure the temperature of the tapped water. This could be positioned in the tapping unit 6 such as at its outlet, but could be positioned anywhere between this a the secondary outlet area of the heat exchanger 5.

The temperature of the tapped water is measured by the temperature sensor 12 and the primary side flow rate (and possible the secondary side flow rate) is adjusted until the requested temperature is reached, and thereafter controlled to maintain the flow rate.

The controlling may be by any means such as a P, PI, PID feedback method etc. A controller may be connected to the system, such as forming part of the tapping unit 6 or communicating with it by any means, the controller comprising the required processing means and algorithms to make the calculations and to send the required signals to the flow controlling means 8 to adjust accordingly.

In alternative or additional embodiments the controlling means operate according to and expanding fluid and/or gas changing volume in response to temperature changes. The communication 11 thus could be a capillary tube with the fluid and/or gas thus also forming a feedback line.

The tapping means 6 may comprise displaying means for the user to see the selected values and/or the actually measured values.

In one embodiment the pumping means 7 is activated through switching means 13 and the switch is activated by a starting flow through the cold water line 4. A flow sensor 14 may be connected to the cold water line 4 registering a starting flow rate, or the information may be given directly from e.g. the tapping unit 6. Once a flow in the cold water line 4 is registered the pump is started at some rate, where this at least is sufficient to meeting the set primary flow rate.

The heating system 1 could be connected to a plural of heat exchangers 5 and associated tapping units 6, where a single pumping means 7 is connected to service them all. In this embodiment the pumping means 7 would be started independent on which tapping unit is opened, but only based on a starting flow rate in the cold water line 4. The flows then only would be directed to those devices where a tapping unit 6 is open, thus instructing the flow controlling means 8 to pass through fluid.

In one embodiment the pumping means 7 is the first part 8a of the flow regulating means 8.

The heating system could form part of a district heating network, the heating fluid supply line 2 and return line 3 respectively being either directly connected to the network, or indirectly connected through a heat exchanger. Alternatively it could form part of other heating means, such as solar heating etc.

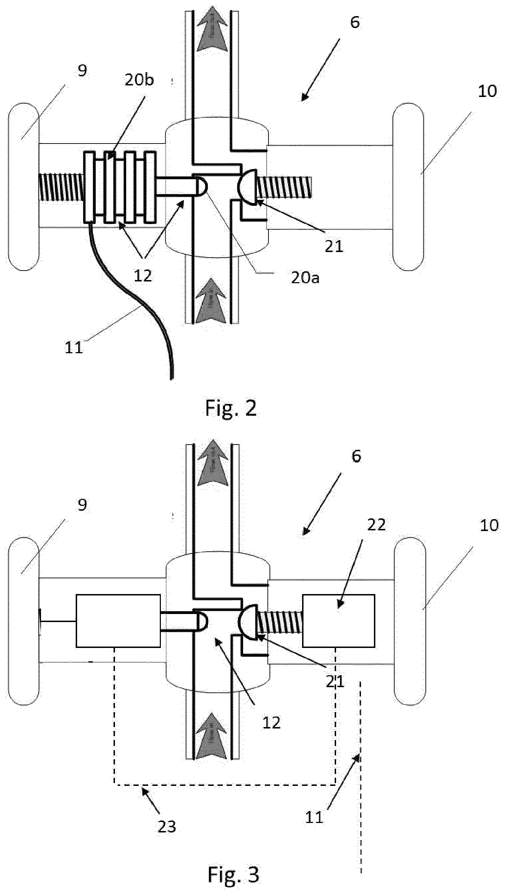

Fig. 2 illustrate one mechanical example embodiment of a tapping unit 6 including a temperature setting 9 and a flow rate setting 10. The temperature sensor 12 in the illustrated example comprises a first part 20a having an inner volume and an outside surface part being in contact to the water entering the tapping unit 6 from second side outlet of the heat exchanger 5. The inner volume of part 20a is in connection to the inner volume of a second part 20b, where the volume of the second part 20b is adjustable by the temperature setting 9. The inner volume of first and second parts 20a, 20b is filled with a fluid and/or gas that expands its volume when its temperature increases and correspondingly contracts its volume when its temperature decreases. A communication tube 11 (e.g. capillary tube) then forms the communication to the flow regulating means 8. In an embodiment the communication 11 thus is in connection to the inner volume of the second part 20b and filled with the same fluid and/or gas.

The communication tube 11 then could be in contact to a volume defining a pressure chamber having one wall defined by a membrane deflecting due to changes in the pressure difference over the membrane. The other side of the membrane could then be in contact to e.g. a biasing member. The deflection of the membrane defines a valve opening of the heating flow regulating means 8a and thus regulates the primary side flow rate in response to a change of the volume of the fluid and/or gas within temperature sensor 12 parts 20a, 20b, the communication tube 11 and the inner volume of the flow regulating means 8 being in contact to the one side of the membrane, this volume together defining a flow sensor volume. In an embodiment the heating flow regulating means 8a thus is a thermostatic valve 8a and the membrane containing part may form an integrated part of the valve 8a, or may be an actuator connected thereto.

In the illustrated embodiment the temperature sensor volume is adjustable by the temperature setting 9 changing the inner volume of the second part 20b of the temperature sensor 12, thus changing the temperature set point.

The illustrated embodiment tapping unit 6 in fig. 2 further includes the flow setting means 10 operating to domestic flow regulating part, or valve, 21 to adjust a valve opening, and thus sets the flow rate of the water tapped by the tapping unit 6.

Alternative versions on the temperature sensor 12 and thermostatic valve means in the flow regulation means 8 would also apply, such as including bimetallic, wax pellet or pneumatic thermostats etc.

Fig. 3 illustrate an electronic version of a tapping unit 6, such as including electric temperature setting 9 and flow setting means 10 communicating 23 with a controller 22 including a processor, the controller 22 being internal or external to the tapping unit 6. The temperature sensor 12 could be of any kind generating a signal for the controller 22. The controller 22 would respond by adjusting the flow rate of water in the secondary side of the heat exchanger 5 to be tapped, either by regulating an internal flow regulating part 21 of the by tapping unit 6 or the heating flow regulating means 8b of the flow regulating means 8 of the heat exchanger 5. This regulation could be through connected flow positioning means like actuators. In the same manner the controller 22 would set the primary side flow rate of the heat exchanger 5 according to a temperature set-point and in response to the measured temperature of the water entering the tapping unit 6, by adjusting the heating flow regulating means 8a. Again this regulation could be through connected flow positioning means like actuators. In this case the communication 11 would be any kind of means sending electrical, analogue, digital etc. signals.

The present invention could employ a mix of different sub-parts of the above embodiments, or other solutions doing the same.

In one embodiment the system operates by the user opening for a flow by the flow rate setting 10 and thus induces a flow through the secondary side of the heat exchanger 5. The flow regulating means 8 reacts by opening for the heating flow regulating means 8a and thus the primary side flow rate, where this flow rate would be adjusted according to the set temperature by the temperature setting 9. This embodiment would apply to any of the embodiments.

In an embodiment an interconnection between the first 8a and second 8b parts of the flow regulating means 8 would exist such that the opening of the one would open the other.

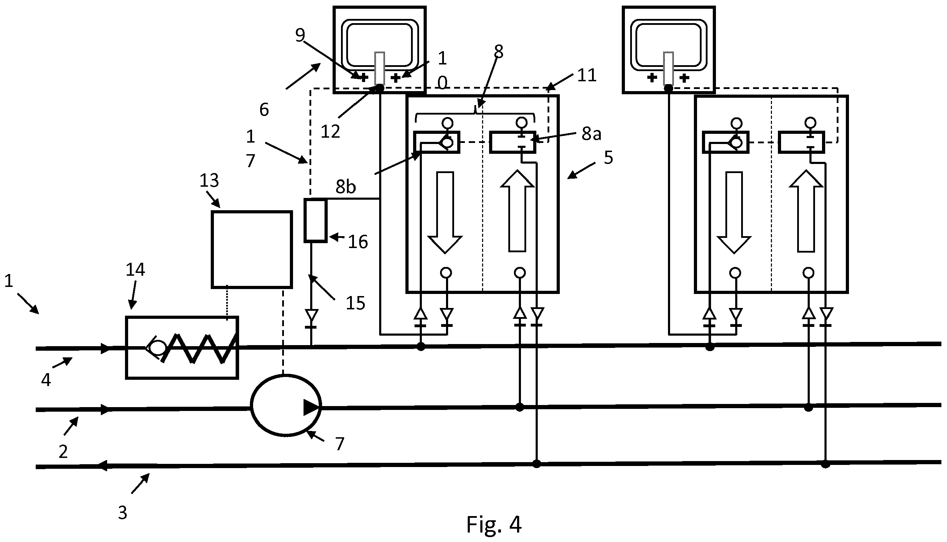

Fig. 4 shows an additional possible embodiment of the present system, where a bypass line 15 connects the cold water supply line 4 directly to the tapping unit 6 in addition to the connection to the heat exchanger 5. A flow controlling device 16, such as a valve, controls the flow through the bypass line 15.

In an embodiment there usually will not be any flow through the bypass line 15, but if the flow passing the secondary side flow path of the heat exchanger 5 has been heated more than requested, and it seems impossible to obtain this temperature, the flow controlling device 16 may be instructed 17 to open for the flow to be mixed with the outputted secondary side fluid flow.

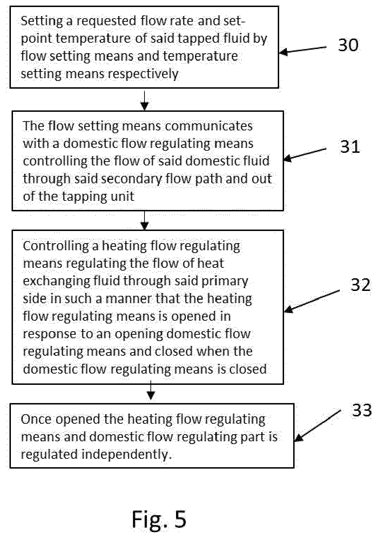

Fig. 5 illustrate the method to control the tapping of a domestic fluid by a tapping unit (6) connected to a flow system comprising a heat exchanger (5) with a primary flow path and a secondary flow path, said method include the step (30) of setting a requested flow rate and set-point temperature of said tapped fluid by flow setting means (10) and temperature setting means (9) respectively, and a step (31) where the flow setting means (10) communicates with a domestic flow regulating means (21) controlling the flow of said domestic fluid through said secondary flow path and out of the tapping unit (6), and a step (32) where said method includes controlling a heating flow regulating means (8a) regulating the flow of heat exchanging fluid through said primary side in such a manner that the heating flow regulating means (8a) is opened in response to an opening domestic flow regulating means (21) and closed when the domestic flow regulating means (21) is closed, and a step (33) where once opened the heating flow regulating means (8a) and domestic flow regulating part (21) is regulated independently.

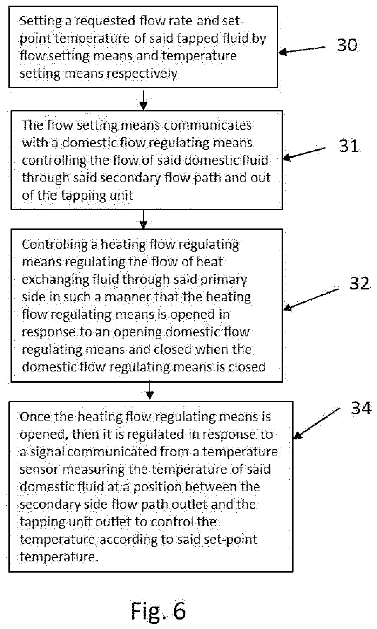

In fig. 6 the step (33) is replaced with a more advanced version over the embodiment of fig. 5, a step (34) wherein once the heating flow regulating means (8a) is opened, then it is regulated in response to a signal communicated (11) from a temperature sensor (12) measuring the temperature of said domestic fluid at a position between the secondary side flow path outlet and the tapping unit (6) outlet to control the temperature according to said set-point temperature.

## Claims

1. A fluid flow system comprising a domestic flow path connecting a tapping unit (6) outlet to a supply of domestic fluid, where a heat exchanger (5) has a secondary flow path connected at the domestic flow path, the tapping unit (6) is connected to the secondary side flow path outlet, and where flow setting means (10) is adapted for a user to open and close a domestic flow regulating means (21) connected to the domestic flow path, said flow system further includes a heating flow regulating means (8a) for adjusting the flow rate of a heat exchanging fluid through a primary side path of said heat exchanger (5), **characterized in that** said system comprises means (8b) to ensure said heating flow regulating means (8a) is only open when there is a flow through said domestic flow path, wherein the heating flow regulating means (8a) is connected to flow sensing means (8b) positioned in relation to the domestic fluid flow path, and where the first flow regulating part (8a) is opened only when the flow sensing means (8b) registers a flow of domestic fluid, **characterized in that** the second part (8b) is a check valve physically connected to the heating flow regulating means (8a) opening it when there is a flow in the domestic flow path, and otherwise being closed.

2. A fluid flow system according to claim 1, wherein a temperature sensor (12) is positioned at the domestic flow path after the secondary flow path outlet for measuring the temperature of said domestic fluid, and where said heating flow regulating means (8a) is to adjusted according to a signal communicated (11) from a temperature sensor (12) according to a set-point temperature set by temperature setting means (9).

3. A flow system according to claim 2, wherein the first flow regulating means (8a) includes a valve forming a valve opening and is connected to an actuator connected to said signal communication (11) and comprising positioning means to adjust said valve opening in response to a signal from said signal communication (11).

4. A flow system according to claim 3, wherein said heating flow regulating means (8a) forms a first part and said flow sensing means (8b) forms a second part of a flow regulating means (8) connected in relation to the primary and secondary flow path respectively of said heat exchanger (5).

5. A flow system according to claim 3 or 4, wherein said temperature sensor (12) includes a flow sensor volume filled with a gas and/or fluid reacting to a temperature change by a change of its volume, and where said communication (11) is a fluid communication connected to an inner volume of an actuator connected to said heating flow regulating means (8a) affecting its valve opening.

6. A flow system according to claim 5, wherein said temperature sensor (12) includes an adjustable volume part (20b) connected to said temperature setting means (9) such that a regulation of the temperature setting means (9) induces a volume change of the adjustable volume part (20b) and thereby a changed temperature set-point.

7. A flow system according to one of claims 2 to 3, wherein the temperature setting (9) and/or flow setting means (10) communicates with a controller (22) that also communicates with the temperature sensor (12) and where the controller (22) translates the settings and the measured temperature into a control signal communicated to said heating flow regulating means (8a) and said domestic flow regulating means (21).

8. A flow system according to claim 7, wherein the controller (22) communicates with actuating means connected to said first regulating part (8a) and/or said flow regulating part (21).

9. A flow system according to claim 8 and claim 2, wherein said flow setting means (10) is said flow sensing means (8b).

10. A flow system according to claim 4, wherein said flow setting means (10) is connected to valve (21) within said tapping unit (6) for setting the flow rate of domestic fluid to be tapped.

11. A method to control the tapping of a domestic fluid by a tapping unit (6) connected to a flow system comprising a heat exchanger (5) with a primary flow path and a secondary flow path, said method include setting a requested flow rate and set-point temperature of said tapped fluid by flow setting means (10) and temperature setting means (9) respectively, where the flow setting means (10) communicates with a domestic flow regulating part (21) controlling the flow of said domestic fluid through said secondary flow path and out of the tapping unit (6), where said method includes controlling a heating flow regulating means (8a) regulating the flow of heat exchanging fluid through said primary side in such a manner that the heating flow regulating means (8a) is opened in response to an opening domestic flow regulating means (21) and closed when the domestic flow regulating means (21) is closed, but otherwise heating flow regulating means (8a) and domestic flow regulating part (21) is regulated independently, said method operating the system according to claim 1.

12. A method according to claim 11, wherein once the first flow regulating part (8a) is opened, then it is regulated in response to a signal communicated (11) from a temperature sensor (12) measuring the temperature of said domestic fluid at a position between the secondary side flow path outlet and the tapping unit (6) outlet to control the temperature according to said set-point temperature.

13. A flow system or method according to any of the preceding claims 1-10, wherein said connection of the tapping unit (6) to the secondary flow path outlet of said heat exchanger (5) is the only fluid connection to said tapping unit (6).

## Patentansprüche

1. Fluidflusssystem, umfassend einen Haushaltsflussweg, der einen Auslass einer Zapfeinheit (6) mit einer Zufuhr von Haushaltsfluid verbindet, wobei ein Wärmetauscher (5) einen sekundären Flussweg aufweist, der mit dem Haushaltsflussweg verbunden ist, wobei die Zapfeinheit (6) mit dem sekundärseitigen Flusswegauslass verbunden ist, und wobei eine Flusseinstelleinrichtung (10) für einen Benutzer zum Öffnen und Schließen einer mit dem Haushaltsflussweg verbundenen Haushaltsflussregeleinrichtung (21) eingerichtet ist, wobei das Flusssystem ferner eine Heizflussregeleinrichtung (8a) zum Einstellen der Flussrate eines wärmeaustauschenden Fluids durch einen primärseitigen Weg des Wärmetauschers (5) umfasst, **dadurch gekennzeichnet, dass** das System eine Einrichtung (8b) umfasst, um sicherzustellen, dass die Heizflussregeleinrichtung (8a) nur dann geöffnet ist, wenn ein Fluss durch den Haushaltsflussweg vorhanden ist, wobei die Heizflussregeleinrichtung (8a) mit einer Flusserfassungseinrichtung (8b) verbunden ist, die in Bezug auf den Haushaltsfluidflussweg positioniert ist, und wobei der erste Flussregelteil (8a) nur dann geöffnet ist, wenn die Flusserfassungseinrichtung (8b) einen Fluss von Haushaltsfluid registriert,
**dadurch gekennzeichnet, dass**
der zweite Teil (8b) ein Rückschlagventil ist, das physisch mit der Heizflussregeleinrichtung (8a) verbunden ist und dieses öffnet, wenn ein Fluss im Haushaltsflussweg vorhanden ist, und andernfalls geschlossen ist.

2. Fluidflusssystem nach Anspruch 1, wobei ein Temperatursensor (12) am Haushaltsflussweg nach dem sekundären Flusswegauslass zum Messen der Temperatur des Haushaltsfluids angeordnet ist, und wobei die Heizflussregeleinrichtung (8a) entsprechend einem aus einem Temperatursensor (12) übermittelten Signal (11) entsprechend einer durch eine Temperatureinstelleinrichtung (9) eingestellten Solltemperatur einzustellen ist.

3. Flusssystem nach Anspruch 2, wobei die erste Flussregeleinrichtung (8a) ein Ventil umfasst, das eine Ventilöffnung bildet und mit einem Stellglied verbunden ist, das mit der Signalkommunikation (11) verbunden ist und eine Positioniereinrichtung zum Einstellen der Ventilöffnung als Reaktion auf ein Signal aus der Signalkommunikation (11) umfasst.

4. Flusssystem nach Anspruch 3, wobei die Heizflussregeleinrichtung (8a) einen ersten Teil und die Flusserfassungseinrichtung (8b) einen zweiten Teil einer Flussregeleinrichtung (8) bildet, die in Bezug auf den primären bzw. sekundären Flussweg des Wärmetauschers (5) verbunden sind.

5. Flusssystem nach Anspruch 3 oder 4, wobei der Temperatursensor (12) ein Flusssensorvolumen aufweist, das mit einem Gas und/oder einem Fluid gefüllt ist, das auf eine Temperaturänderung durch eine Änderung seines Volumens reagiert, und wobei die Verbindung (11) eine Fluidverbindung ist, die mit einem Innenvolumen eines mit der Heizflussregeleinrichtung (8a) verbundenen Stellglieds verbunden ist, das dessen Ventilöffnung beeinflusst.

6. Flusssystem nach Anspruch 5, wobei der Temperatursensor (12) einen einstellbaren Volumenteil (20b) aufweist, der mit der Temperatureinstelleinrichtung (9) so verbunden ist, dass eine Regelung der Temperatureinstelleinrichtung (9) eine Volumenänderung des einstellbaren Volumenteils (20b) und dadurch einen geänderten Temperatursollwert bewirkt.

7. Flusssystem nach einem der Ansprüche 2 bis 3, wobei die Temperatureinstell- (9) und/oder Flusseinstelleinrichtung (10) mit einer Steuervorrichtung (22) kommuniziert, die auch mit dem Temperatursensor (12) kommuniziert, und wobei die Steuervorrichtung (22) die Einstellungen und die gemessene Temperatur in ein Steuersignal umwandelt, das an die Heizflussregeleinrichtung (8a) und die Haushaltsflussregeleinrichtung (21) übermittelt wird.

8. Flusssystem nach Anspruch 7, wobei die Steuervorrichtung (22) mit einer Betätigungseinrichtung kommuniziert, die mit dem ersten Regelteil (8a) und/oder dem Flussregelteil (21) verbunden ist.

9. Flusssystem nach Anspruch 8 und Anspruch 2, wobei die Flusseinstelleinrichtung (10) die Flusserfassungseinrichtung (8b) ist.

10. Flusssystem nach Anspruch 4, wobei die Flusseinstelleinrichtung (10) mit einem Ventil (21) innerhalb der Zapfeinheit (6) verbunden ist, um die Flussrate des zu zapfenden Haushaltsfluids einzustellen.

11. Verfahren zum Steuern des Zapfens eines Haushaltsfluids durch eine Zapfeinheit (6), die mit einem Flusssystem verbunden ist, das einen Wärmetauscher (5) mit einem primären Flussweg und einem sekundären Flussweg umfasst, wobei das Verfahren das Einstellen einer angeforderten Flussmenge und einer Solltemperatur des gezapften Fluids durch eine Flusseinstelleinrichtung (10) bzw. eine Temperatureinstelleinrichtung (9) umfasst, wobei die Flusseinstelleinrichtung (10) mit einem Haushaltsflussregelteil (21) kommuniziert, das den Fluss des Haushaltsfluids durch den sekundären Flussweg und aus der Zapfeinheit (6) heraus regelt, wobei das Verfahren das Steuern einer Heizflussregeleinrichtung (8a) umfasst, die den Fluss von Wärmetauschfluid durch die Primärseite so regelt, dass die Heizflussregeleinrichtung (8a) als Reaktion auf eine sich öffnende Haushaltsflussregeleinrichtung (21) geöffnet wird und geschlossen wird, wenn die Haushaltsflussregeleinrichtung (21) geschlossen ist, aber ansonsten die Heizflussregeleinrichtung (8a) und der Haushaltsflussregelteil (21) unabhängig voneinander geregelt werden, wobei das Verfahren das System nach Anspruch 1 betreibt.

12. Verfahren nach Anspruch 11, wobei, sobald der erste Flussregelteil (8a) geöffnet ist, dieser als Reaktion auf ein Signal geregelt wird, das aus einem Temperatursensor (12) übermittelt wird (11), der die Temperatur des Haushaltsfluids an einer Stelle zwischen dem sekundärseitigen Flusswegauslass und dem Auslass der Zapfeinheit (6) misst, um die Temperatur entsprechend der Solltemperatur zu regeln.

13. Flusssystem oder -verfahren nach einem der vorhergehenden Ansprüche 1-10, wobei die Verbindung der Zapfeinheit (6) mit dem sekundären Flusswegauslass des Wärmetauschers (5) die einzige Fluidverbindung zu der Zapfeinheit (6) ist.

## Revendications

1. Système d'écoulement de fluide comprenant un trajet d'écoulement domestique reliant une sortie d'unité de captage (6) à une alimentation en fluide domestique, où un échangeur de chaleur (5) présente un trajet d'écoulement secondaire raccordé au trajet d'écoulement domestique, l'unité de captage (6) est raccordée à la sortie de trajet d'écoulement côté secondaire et où un moyen de réglage d'écoulement (10) est conçu pour qu'un utilisateur ouvre et ferme un moyen de régulation d'écoulement domestique (21) raccordé au trajet d'écoulement domestique, ledit système d'écoulement comprend en outre un moyen de régulation de flux de chauffage (8a) pour ajuster le débit d'un fluide d'échange de chaleur à travers un trajet côté primaire dudit échangeur de chaleur (5), **caractérisé en ce que** ledit système comprend un moyen (8b) pour garantir que ledit moyen de régulation de flux de chauffage (8a) est seulement ouvert lorsqu'il y a un écoulement à travers ledit trajet d'écoulement domestique, dans lequel le moyen de régulation de flux de chauffage (8a) est raccordé à un moyen de détection d'écoulement (8b) positionné en lien avec le trajet d'écoulement de fluide domestique, et où la première partie de régulation d'écoulement (8a) est ouverte seulement lorsque le moyen de détection d'écoulement (8b) enregistre un écoulement de fluide domestique,
**caractérisé en ce que**
la seconde partie (8b) est un clapet antiretour raccordé physiquement au moyen de régulation de flux de chauffage (8a) ouvrant celui-ci lorsqu'il y a un écoulement dans le trajet d'écoulement domestique et, sinon, qui est fermé.

2. Système d'écoulement de fluide selon la revendication 1, dans lequel un capteur de température (12) est positionné sur le trajet d'écoulement domestique après la sortie de trajet d'écoulement secondaire pour mesurer la température dudit fluide domestique, et où ledit moyen de régulation de flux de chauffage (8a) doit être réglé en fonction d'un signal communiqué (11) depuis un capteur de température (12) en fonction d'une température de point de consigne réglée par un moyen de réglage de température (9).

3. Système d'écoulement selon la revendication 2, dans lequel le premier moyen de régulation de flux (8a) comprend une vanne formant une ouverture de vanne et est raccordé à un actionneur raccordé à ladite communication de signal (11) et comprenant un moyen de positionnement pour régler ladite ouverture de vanne en réponse à un signal provenant de ladite communication de signal (11).

4. Système d'écoulement selon la revendication 3, dans lequel ledit moyen de régulation de flux de chauffage (8a) forme une première partie et ledit moyen de détection d'écoulement (8b) forme une seconde partie d'un moyen de régulation d'écoulement (8) raccordé en lien avec le trajet d'écoulement primaire et secondaire respectivement dudit échangeur de chaleur (5).

5. Système d'écoulement selon la revendication 3 ou 4, dans lequel ledit capteur de température (12) comprend un volume de capteur d'écoulement rempli d'un gaz et/ou d'un fluide réagissant avec un changement de température par un changement de son volume et où ladite communication (11) est une communication fluidique raccordée à un volume interne d'un actionneur raccordé au dit moyen de régulation de flux de chauffage (8a) affectant son ouverture de vanne.

6. Système d'écoulement selon la revendication 5, dans lequel ledit capteur de température (12) comprend une partie de volume réglable (20b) raccordée au dit moyen de réglage de température (9) de telle sorte qu'un réglage du moyen de réglage de température (9) induise un changement de volume de la partie de volume réglable (20b) et, de ce fait, un point de consigne de température changé.

7. Système d'écoulement selon l'une des revendications 2 à 3, dans lequel le moyen de réglage de température (9) et/ou le moyen de réglage d'écoulement (10) communiquent avec un dispositif de commande (22) qui communique également avec le capteur de température (12) et où le dispositif de commande (22) transforme les paramètres et la température mesurée en un signal de commande communiqué au dit moyen de régulation de flux de chauffage (8a) et au dit moyen de régulation d'écoulement domestique (21) .

8. Système d'écoulement selon la revendication 7, dans lequel le dispositif de commande (22) communique avec un moyen d'actionnement raccordé à ladite première partie de régulation (8a) et/ou à ladite partie de régulation d'écoulement (21).

9. Système d'écoulement selon la revendication 8 et la revendication 2, dans lequel ledit moyen de réglage d'écoulement (10) est ledit moyen de détection d'écoulement (8b).

10. Système d'écoulement selon la revendication 4, dans lequel ledit moyen de réglage d'écoulement (10) est raccordé à une vanne (21) à l'intérieur de ladite unité de captage (6) pour régler le débit d'un fluide domestique qui doit être capté.

11. Procédé pour commander le captage d'un fluide domestique au moyen d'une unité de captage (6) raccordée à un système d'écoulement comprenant un échangeur de chaleur (5) ayant un trajet d'écoulement primaire et un trajet d'écoulement secondaire, ledit procédé consiste à régler un débit demandé et une température de point de consigne dudit fluide capté par un moyen de réglage d'écoulement (10) et un moyen de réglage de température (9), respectivement, où le moyen de réglage d'écoulement (10) communique avec une partie de régulation d'écoulement domestique (21) régulant l'écoulement dudit fluide domestique à travers ledit trajet d'écoulement secondaire et en dehors de l'unité de captage (6), où ledit procédé consiste à commander un moyen de régulation de flux de chauffage (8a) régulant l'écoulement d'un fluide d'échange de chaleur à travers ledit côté primaire de telle manière que le moyen de régulation de flux de chauffage (8a) soit ouvert en réponse à l'ouverture du moyen de régulation d'écoulement domestique (21), et soit fermé lorsque le moyen de régulation d'écoulement domestique (21) est fermé, mais, sinon, le moyen de régulation de flux de chauffage (8a) et la partie de régulation d'écoulement domestique (21) sont réglés de manière indépendante, ledit procédé faisant fonctionner le système selon la revendication 1.

12. Procédé selon la revendication 11, dans lequel, une fois que la première partie de régulation d'écoulement (8a) est ouverte, alors elle est réglée en réponse à un signal communiqué (11) depuis un capteur de température (12) mesurant la température dudit fluide domestique à une position entre la sortie de trajet d'écoulement côté secondaire et la sortie d'unité de captage (6) pour réguler la température en fonction de ladite température de point de consigne.

13. Système d'écoulement ou procédé selon l'une quelconque des revendications précédentes 1 à 10, dans lequel ledit branchement de l'unité de captage (6) à la sortie de trajet d'écoulement secondaire dudit échangeur de chaleur (5) est le seul raccordement de fluide à ladite unité de captage (6).
